(19) Europäisches Patentamt
European Patent Office
Office européen des brevets

(11) **EP 1 768 045 A2**

(12) **EUROPEAN PATENT APPLICATION**

(43) Date of publication:
**28.03.2007 Bulletin 2007/13**

(51) Int Cl.:
**G06F 21/00** $^{(2006.01)}$

(21) Application number: **06300972.4**

(22) Date of filing: **21.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **22.09.2005 US 232004**

(71) Applicant: **ALCATEL**
**75008 Paris (FR)**

(72) Inventors:
• **Wiemer, Douglas**
**Ashton, Ontario K0A 1B0 (CA)**
• **Robert, Jean-Marc**
**Ottawa, Ontario K1N 6L2 (CA)**
• **McFarlane, Bradley Kenneth**
**Ottawa, Ontario K2B 8K3 (CA)**
• **Gustave, Christophe**
**Ottawa, Ontario K2B 6P1 (CA)**
• **Chow, Stanley TaiHai**
**Ottawa, Ontario K2H 5A8 (CA)**
• **Tang, Jian**
**Ottawa, Ontario K1G 1X1 (CA)**

(74) Representative: **Hervouet, Sylvie et al**
**Feray Lenne Conseil,**
**39/41, avenue Aristide Briand**
**92163 Anthony Cedex (FR)**

(54) **Application of cut-sets to network interdependency security risk assessment**

(57) The invention is directed to providing threat and risk analysis for a network that has a high degree of inter-relationships and interdependencies among the assets comprising it, using a "cut set" enumeration method. The identified cut sets are used as the basis to the threat and risk analysis, since each cut set may affect the traffic between two dependent assets in the network, and thereby affect the security state of the dependent assets themselves. The affected security state may be confidentiality, integrity, availability, or other network or security relevant parameter.

FIGURE 4

**EP 1 768 045 A2**

**Description**

**Cross-Reference to Related Application**

The present application is related to United States Patent Application Serial No. 11/132,118, entitled "Communication Network Security Risk Exposure Management Systems And Methods" (Cosquer et al.), and filed on May 18, 2005. The entire content of the above-identified related application is incorporated into the present application by reference.

**Field of the invention**

The invention is directed to communication networks and in particular to application of cut-sets method to network interdependency security risk assessment.

**Background of the Invention**

Threat and Risk Analysis (TRA) is a common term used in the field of Information Technology Security (IT Security) and network security for describing methods that evaluate security risks and subsequently perform security risk management. TRA and other computer or network security risk evaluation and management approaches are collectively called Security Risk Assessment (SRA) methods.

A security risk assessment is the first step in the life cycle of security management. At a high level, the risk assessment is a process which: evaluates threats to business assets; identifies security weaknesses or vulnerabilities that can be taken advantage of by those threats; and prioritizes business risk. The security risk assessment is the process that typically drives all security planning, analysis and design activities in the later methodology stages. The overriding goal of security is to ensure that the security states of the assets meet the requirements in terms of protect the confidentiality, integrity, and availability of the assets. The risk assessment helps determine what controls need to be in place to meet this goal cost effectively.

Traditional system, hardware and similar reliability assessment methods are not applicable to Security Risk Assessment because these methods are based on the premise that failures are random. This is not the case for SRA (Security Risk Assessment) where failures or compromises are often the result of malicious (intentional) attacks. The random nature of failures in system reliability methods allows for the use of duplicate systems for redundancy. In contrast, in SRA domain, duplicate identical systems would not reduce the likelihood of compromise. Furthermore, in addressing non-random (or correlated) failures or events, advice from system reliability literature indicates that these types of failures cannot be handled.

Risk analysis is a comp lex and time consuming process. In general, it involves:

a) preparing a model of the system under consideration, which implies identifying the assets of the overall system;
b) assigning a value to assets based on the business, operational or service impact of a security event, where a security event is an event causing the lost of confidentiality, integrity or availability;
c) identifying vulnerabilities of assets. The three basic goals of security are ensuring confidentiality, integrity and availability. A vulnerability is any situation that could cause loss of one of those three qualities, termed a security event This step typically requires predicting what damages might occur to the assets, and from what sources;
d) predicting the likelihood of occurrence of a risk, i.e., determining how often each vulnerability could be exploited. Likelihood of occurrence relates to the stringency of the existing controls and the likelihood that a malicious agent will evade the existing controls; and
e) calculating the expected loss by combining the values generated in (b) through (d) in some arbitrary way to estimate the expected cost (impact) of potential incidents. Currently, entities in the business of managing risk exposure, such as corporate management or insurance service groups, have few actual tools to use in estimating cost (impact). Consequently, conventional risk assessment results are often expressed in terms of estimated cost (impact) calculated using approximations or formulas that do not necessarily reflect actual data.

As indicated above at a), one aspect of successful risk analysis is a complete and accurate accumulation of data to generate system models used by the analysis tools. However, security models generated for a certain system with the current modeling methods do not take into account different groups or assets that compose a given service or mission, and therefore cannot provide a realistic view for complex networks. Moreover, once the security risk information is collected, the information is difficult to keep current with the dynamism of the respective corporation. Without automation, therefore, the task of risk analysis can be complex and very time consuming. An example of a model that addresses some or all of these drawbacks is provided in the above-identified co-pending patent application Serial No. 11/132,118.

The model described there provides a single, detailed, normalized view of the network, including scanners data, firewalls, and routers, servers and other hosts, as well as vulnerability data and business logic. Visual maps of the enterprise network, business applications and potential security problems give security personnel a clear overview of infrastructure security at-a-glance and enables drill-down capabilities for more detailed views.

Software vulnerabilities in telecom and IT infrastructures are discovered and disclosed on a regular basis. The capacity to understand and make informed decisions soon after a vulnerability is publicly disclosed is one key aspect of proactive security, enabling the network operators to assign priorities on an action list for risk mitigation. Yet, the potential impact of a vulnerability on a particular network is difficult to assess in a timely fashion due to the number and nature of those vulnerabilities, as well as the number of network assets and their ever increasing embedded software layers. Thus, networks may have hundreds of different applications systems and servers, thousands of user accounts, and exchange billions of bytes of information over the Internet every day. Some assets may also have embedded software layers and other dependencies, which further complicate security assessment. The sheer volume of users and transactions make it more difficult to design and monitor a secure network architecture. The process of inventorying an organization's application systems, the current level of security measures implemented by the organization, and even the applications architecture can be a daunting task.

In most cases, the current SRA solutions calculate business risks using an attack likelihood based on path determination (i.e. determining the chain of vulnerabilities and assets used to complete the attack). However, in a large and complex network it is extremely difficult and almost impossible to determine all the paths associated with various attacks and therefore their associated likelihoods. In addition, reducing risk calculation to a specific path may be more efficient for a particular vulnerability or combination of vulnerabilities but could lead to misunderstanding of a more complex situation. This simplification could effectively minimize the actual risk which could have a huge impact on the overall assessment of the network security state.

Current generation risk analysis tools could be classified as: network vulnerability scanners (ISS, Symantec, e-Eye Digital Security, Clickto-Secure), intrusion detection systems (netscreen, F-secure, Sprient, Arbor Networks), security event information management (IBM, ArcSight, Intellitactics, NetForensics, e-Security, Symantec) and exposure risk management tools (Skybox View).

1) Tools that work from documented vulnerability databases and possibly repair known vulnerabilities. Tools of this type are vendor-dependent for database updates, either through new product versions or by a subscription service. Examples from this category include ISS' Internet Scanner, Network Associates, Inc.'s CyberCop and Harris' STAT.
2) Monolithic tools that use various parameters to calculate a risk indicator. These tools are difficult to maintain and hard to keep current with the rapidly evolving threat and technology environment. An example of this tool category is Los Alamos Vulnerability Assessment (LAVA) tool.
3) Tools that examine a particular aspect of the system, such as the operating system or database management system, but ignore the other system components. SATAN, for example, analyzes operating system vulnerabilities, but ignores infrastructure components such as routers.

Nonetheless, the currently available SRA tools are deficient in many respects. For example, they use proprietary and fixed risk calculation formulas. These formulas are based on various fixed assumptions which typically include, among others, assumptions relating to network topology (mesh, star, etc.), data (modeling, availability, uncertainty, and type such as qualitative or quantitative), organization type (military, government, business, etc.), and variables (threat, vulnerability, asset value, attack paths). Outputs provided by such formulas also tend not to reflect the actual implications of security in complex information systems. Use of multiple tools from a variety of vendors for a single system analysis is a labor-intensive task. Typically, a security engineer will have to enter a description or representation of the system (network) multiple times in multiple formats. The security engineer then must manually analyze, consolidate and merge the resulting outputs from these multiple tools into a single report of a network's security posture. Afterwards, the security engineer can complete the risk analysis (calculating expected annual loss, surveying controls, etc.), and then repeat the process to analyze alternatives among security risks, system performance, mission functionality and the development budget

The complexity of SRA solutions is compounded in the case of networks that have a high degree of inter-relationships, interdependencies and possible redundancy, hereinafter referred to as "networking systems". There are few methods dealing with interdependency issues, and those that do, address it based either on corporate interdependency for IT Security Risk Insurance (due to dependencies on external companies for business, that may not have appropriate IT Security controls in place), or for network and enterprise security (describing the deficiencies in creating a network security model that adequately addresses interdependence).

In theSRA field, use of algorithms that address highly interdependent systems and networks are predicated on the availability of an appropriate and scalable network security model. However, since no network security models are currently available, calculating the security risk of highly interdependent systems is not currently performed. There are network management mechanisms to model highly interconnected systems, but these do not currently address security issues and SRA. Needless to say, as a result, the potential impact of security vulnerabilities in these networking systems is even more difficult to manage. In general, SRA for interconnected systems is done on an asset-by-asset basis. However, the above identified co-dependent patent application Serial No. 11/132,118 provides a mechanism to model a highly interdependent networking system, thus allowing further analysis based on the methods described herein.

There is a need for more comprehensive and flexible security assessment and management tools to provide threat and risk analysis for networking systems. A need also exists for an improved method of assessing the information security of large corporate systems in a manner that is based on best industry practices and principles and is reliable, repeatable, cost efficient, and consistent across systems.

## Summary of the Invention

It is an object of the invention to provide an easy-to-use and reliable risk calculation framework for a networking system.

It is another object of the invention to provide a comprehensive and flexible security risk assessment and management tool that alleviates totally or in part the drawbacks of the current SRA methods.

Accordingly, the invention provides a security risk analysis method for a system with a high degree of inter-relationships and interdependencies among a plurality of system assets and services, comprising: a) preparing a model for the system; b) from the model, preparing a graph G[V,E] with graph nodes V representing the assets and services, and edges E representing the relationships between the assets and services; c) on the graph, enumerating all minimal cut-sets (MCS) between a first group of graph nodes and a second group of graph nodes to identify all graph nodes that may impact relationships between the first and second groups of dependent graph nodes; and d) assessing the security state of the graph nodes in the MCS's.

Advantageously, the invention allows evaluation of security risks for highly interconnected systems, and for systems with high levels of interrelationship, interdependence between assets and redundancy.

Another advantage of the invention is that it allows interaction between exploits and assets. For example, let's say that an exploit attacks a network of the interconnected assets (Alcatel's) and a second exploit attacks another network of assets (Cisco's). Separately, these exploits do not take down the complete network together, they may. Use of the invention enables to detect the assets that are more vulnerable to such an attack and take the appropriate countermeasures.

## Brief Description of the drawings

The foregoing and other objects, features and advantages of the invention will be apparent from the following more particular description of the preferred embodiments, as illustrated in the appended drawings, where:

**Figure 1** illustrates a block diagram representation of security concepts;
**Figure 2** illustrates types of assets and assets dependencies in a security system;
**Figure 3A** shows an example of a cut-set method as applied to a network interconnecting two assets in a "depends on" relationship;
**Figure 3B** shows the graph for the network shown in the example of Figure 3A;
**Figure 4** is a flowchart of the security risk assessment method according to an embodiment of the invention;
**Figures 5A** and **5B** show the flowchart of the cut-set enumeration method according to an embodiment of the invention, where Figure 5A illustrates the main steps, and Figure 5B shows in further detail the steps of the cut-set enumeration subroutine of the flowchart of Figure 5A;
**Figure 6** shows the graph of an exemplary network where two "connected-to" assets *a* and b have a "depends-on" relationship;
**Figures 7A-7D** shows the stages of cut-set enumeration for an example of a graph of Figure 5; and
**Figure 8** illustrates, using an expansion tree, the recursive steps (i=1 to 8) for determining the minimal cut-sets for the network of Figure 5.

## Detailed Description

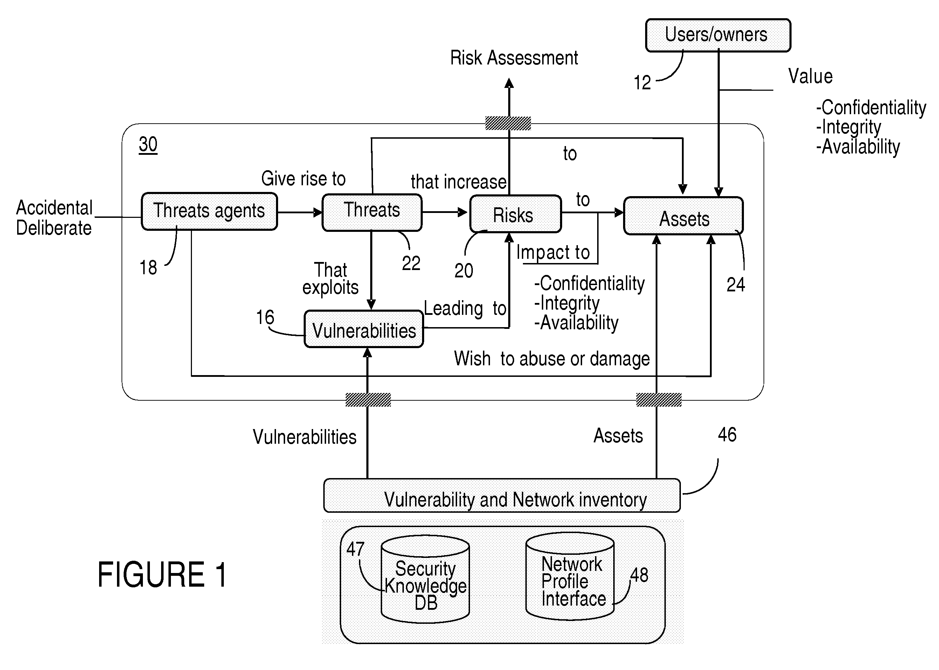

This invention provides a mechanism to assess the security risks in networking systems. Figure 1 is a block diagram representation of a security decision model **30** presented in the above-identified co-pending Patent Application '118. Figure 1 shows users/owners **12** of model **30,** the entities of the model **30,** and their relationships. Thus, model **30** represents vulnerabilities **16**, threat agents **18,** risks **20,** threats **22,** and assets **24**. Users/owners **12** may include, for example, owners or operators of a communication network, or other stakeholders having an interest in assets **24.**

An asset may be a physical or logical component of a communication network. Assets **24,** in the example of a communication network, are components of the network and may be either physical or logical. As seen, users/owners **12** value assets, wish to minimize risks **20** to the assets **24,** and may be aware of vulnerabilities **16** which lead to risks **20.**

Various vulnerabilities **16** may exist for each type of asset **24.** A vulnerability **16** is a condition in operation of an asset, which makes it susceptible to an attack, or possibly a failure. A security hole in operating system software is one illustrative example of a vulnerability. The severity level attached to a vulnerability is a probability value [0..1], which is low if the attacker requires high knowledge, or specialized equipment and many resources to conduct an attack. On the other hand, the vulnerability is rated high severity if the attacker requires low knowledge, no specialized equipment and/or few resources, such as for example a PC and a high-speed Internet connection. Vulnerabilities **16** may be reduced by the users/owners **12** by imposing countermeasures, i.e. actions, such as upgrading a operating system or application software on a computer system asset.

Threat agents **18** are parties wishing to abuse or use assets **24** in a manner not intended by their users/owners **12.** A threat **22** is an indication, circumstance or event with the potential to cause the loss of, or damage to an asset. The threat value measures of the motive and the capability of (possibly unknown) adversary; for a broad spectrum of user, it is adequate to assign a threat value based on the vulnerability. This is a probability value [0..1] which is interpreted going from low to high.

System **30** uses a vulnerability and network inventory database system **46** that stores either information associated with vulnerabilities and assets, or information from which vulnerability and asset information may be derived. Database system **46** may include a security knowledge database **47** for storing information associated with known vulnerabilities, or security information which is converted or otherwise processed to automatically generate vulnerability information. Database system **46** may further include a network profile database **48** for storing network inventory information. Information associated with network assets may be obtained from the network profile database **48** or derived from information which is obtained from the network profile database **48.** The databases **47, 48** may reside at a server in a LAN (Local Area Network), for example, in which case information is accessible through a network interface and LAN connections.

For example, the vulnerability information may be represented into a data structure with a vulnerability identifier field and a vulnerability description field. Also by way of example, the asset data structure may include an asset identifier field, an asset type field (e.g. physical or logical asset, service or mission to which the asset is critical or important, etc), an asset value field (security dimension and/or a dollar value), and an asset profile field (information for mapping vulnerabilities to assets, access mechanisms, etc). Information associated with the relationships between an asset and other assets may also be included in the asset profile, in the form of a type of relationship and an asset ide ntifier for each relationship. Based on the security decision model and the vulnerability and network inventory system **46,** a risk analyzer as that described in the co-pending application Serial No. 11/132,118, maintains a security state database (not shown) with the security state of assets in the networks.

The security state includes measures of risk to confidentiality, integrity, availability, or other network or security relevant parameter. The security state is stored as a data structure including preferably an asset or feature identifier, and security state information including direct exposure information, indirect exposure information, total exposure information, and risk information. The security state information fields store exposure and risk values, an identifier of another asset, a relationship type, and a propagated vulnerability in the case of the indirect exposure information, for example. The asset, vulnerability and security data structure information is stored in vulnerability and network inventory database **46.** It is to be noted that the above data structures were presented by way of example and they are not intended to limit the scope of the invention.

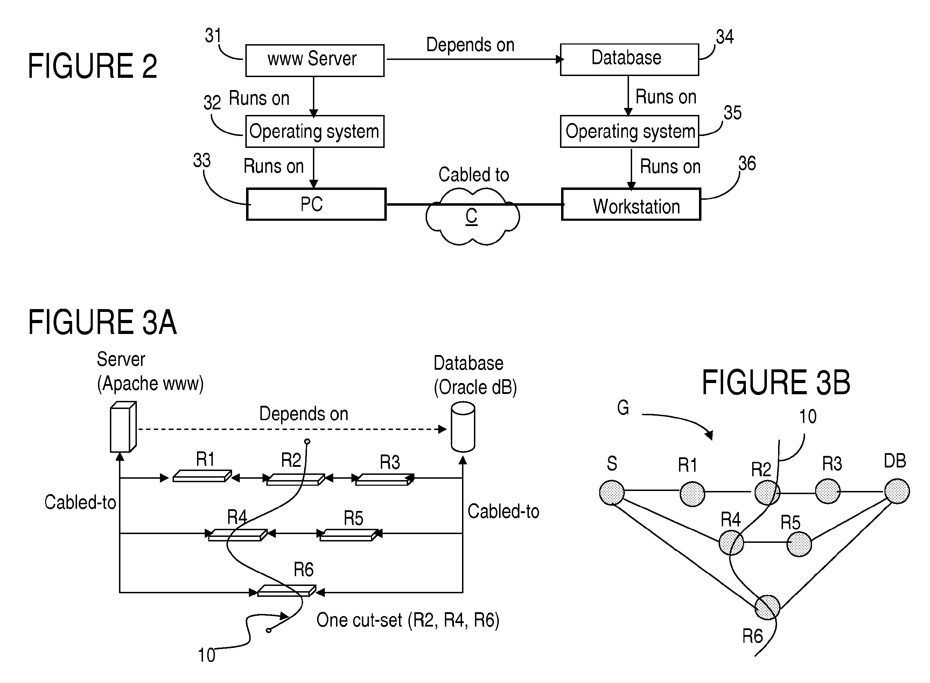

A network model is described by the network assets and the relationships between these assets. Figure 2 illustrates a simple network model showing types of assets as well as examples of inter-asset relationships. In this example, a personal computer **33** and a workstation **36** are physical assets, and the operating systems **32, 35,** the Internet server **31,** and the database **34** are logical assets. The present invention is in no way limited to the particular assets and relationships shown in Figure 2. Other types of assets and relationships may also exist in a communication network or other system for which risk is to be assessed.

Relationships between these assets are also shown in Figure 2. A relationship describes how assets are interconnected and/or their functional dependencies. Once a relationship has been defined, the assets which are part of a particular relationship are linked to the relationship. The relationships between assets may be dependency and connectivity relationships; in a security decision model the dependency between two assets is identified by a "Depends-on" relationship, and the connectivity of the network nodes is identified by a "Cabled-to" relationship. In this example, the PC **33** and the workstation **36** have a "cabled-to" relationship, indicating that these assets communicate e.g. through a physical connection. The operating systems **32** and **35** are executed by processors at the PC **33** and workstation **36,** and thus have a "runs-on" relationship with the respective physical asset **33, 36.** Server **31** and database **34** are supported by software which is also executed by processors in the PC **33** and the workstation **36.** As this type of software would normally be executed by or within the operating systems **32**, **35,** the server **31** and the database **34** have a "runs-on" relationship with the respective operating systems **32, 35.**

Another type of relationship is illustrated in Figure 2 between the server **31** and the database **35.** The server **31** may provide an inventory system which accesses inventory information stored in the database **35,** for example. The server **31,** or a function it supports, is thereby dependent upon, and thus has a "depends-on" relationship with, the database **35.** The relationship between assets may also be represented in terms of its type ("cabled-to", "runs-on", and "depends-on"), numbers of assets between which the particular relationship may exist (e.g. a "cabled-to" relationship requires at least two endpoint assets); security parameters may also be included in the specification of a relationship.

The type of propagation of vulnerabilities between assets may be dependent upon the relationship between those assets. For example, a depends-on relationship between server **31** and database **34** might indicate that server **31** availability depends-on database **34** availability, but in the case of a cabled-to relationship, this might not be so. In the latter case, just because asset PC **33** is made unavailable does not necessarily mean that workstation **36** is unavailable. By determining relationships between assets associated with a communication network, a security risk analysis system may be used to assess the propagation of vulnerabilities between related assets.

The risk of an asset $(Risk_A)$ depends on the value of the asset $(Value_A)$ and the probability that a weakness has been exploited against the asset $(Likelihood_A)$. Suppose that an asset A is affected by $k$ vulnerabilities $V_1....V_K$. Typically, the risk associated to this single asset is defined as follows:

$$Risk_A = Value_A \times Likelihood_A$$

EQ1

$$Likelihood_A = Threat_A \times maximum \{Vulnerability(V_i) \mid 1 = i = k\}$$

EQ2

Here, $Value_A$ refers to the amount of loss or damage associated to the compromise of asset A. The likelihood equation EQ2 relies on a given hypothesis, which assumes that for each vulnerability $Vi$ that affects this asset, there must be an "exploited-by" relationship either direct or indirect, between $Vi$ and this asset.

As indicated above, EQ1 and EQ2 are appropriate for a single asset. Suppose now that a service S depends on k assets $A_1..A_K$. If all assets $A_1..A_K$ have to be free of compromise (where compromise would result in loss or partial loss of Confidentiality, Integrity or Availability, or other network or security parameter at the asset), the risk associated to the respective service is calculated as follows:

$$Risk_S = Value_S \times maximum \{Likelihood(A_i) \mid 1 = i = k\}$$

EQ3

$Likelihood(A_i)$ defines the probability that a vulnerability has been exploited against an asset $A_i$. EQ3 relies on a given hypothesis, which assumes that if $Likelihood (A_i) < Likelihood (A_j)$ then, for a given adversary with a given motive and capability, the likelihood reduces to the vulnerability level. As well, according to the definition of vulnerability, if an adversary can perform a low vulnerability attack (i.e. it has high knowledge and/or many specialized resources), he can also perform a high vulnerability attack.

If only (at least) one of the assets $A_1...A_K$ has to be free of compromise (e.g. redundant servers or databases for resilience purpose), the risk associated to the service is calculated according to EQ4:

$$Risk_A = Value_A \times minimum \{Likelihood(A_i) \mid 1 = i = k\}$$

EQ4

The "cabled-to" relationship in the model represents e.g. an underlying network offering a network service.

Therefore, if an asset *a,* as for example server **31** of Figure 2 depends on an asset b, namely database **34,** there is an underlying assumption that *a* can have access to b through an interconnecting network *C* represented by a path of "cabled-to" relationships. In such a case, *a* depends on *b* and *C.* The risk associated to *a* is given by EQ1. Therefore, the likelihood associated to network *C* needs to be evaluated.

The present invention applies the cut-sets method to a network model that defines the interrelationships and interdependencies in highly connected systems or networks. A cut-set or a cut refers to a set of nodes (or edges) that are removed from a graph, and whose removal disconnects (or cuts) the graph into two connected components on distinct sub-graphs. The minimum cut problem is to find a cut of a minimum size; in other words no sub-set of a minimal cut-set is still a cut-set. In a networking system, a cut or cut-set is a minimal set of nodes selected in such a manner that by removing these nodes of the set, and their adjacent connections, leaves two dependent assets, such as assets **31** and **34** in Figure 2, in two different connected components or networks (i.e. there is no path between the dependent assets in the remaining sub-networks).

Given that removal of the nodes of a cut-set results in two different connected components or networks, with no path remaining between the dependent assets, it results that each identified cut-set may affect in a certain way the security state of the traffic between the two dependent assets, and thereby the security state of the dependent assets themselves. Therefore, the nodes of a cut-set form a set of nodes whose security state should be assessed and prioritized in some order for further mitigation of vulnerable security state.

The cut-set method is used to enumerate the nodes whose security state may impact the communication between two dependent assets. This is done in order to identify and prioritize the nodes that should be secured (or remediated) in order to ensure confidential, accurate and available communications between the two dependent assets.

Figure 3A illustrates the cut-set concept, by providing a simplified representation of an interconnected network and one of the resulting cut-sets. An asset named "Apache WWW" is linked via a "dependency" relationship type to another asset named "Oracle DB". These two assets are physically linked via multiple "connectivity" relationships with assets in-between. With this configuration, it is expected to find 6 different ways to disconnect "Apache WWW" from "Oracle DB" asset. Figure 3A shows one of these cuts, namely a cut **10** including nodes (routers) **R2, R4** and **R6,** and their connections with the respective direct neighbors. Figure 3B illustrates the graph G(X) of the network of Figure 3A, where the assets are the nodes of the graph and the "cabled-to" relationships are the edges of the graph. The graph is then used as discussed later for determining the minimal cut-set for the respective assets pair (Apache WWW and Oracle DB in this example)

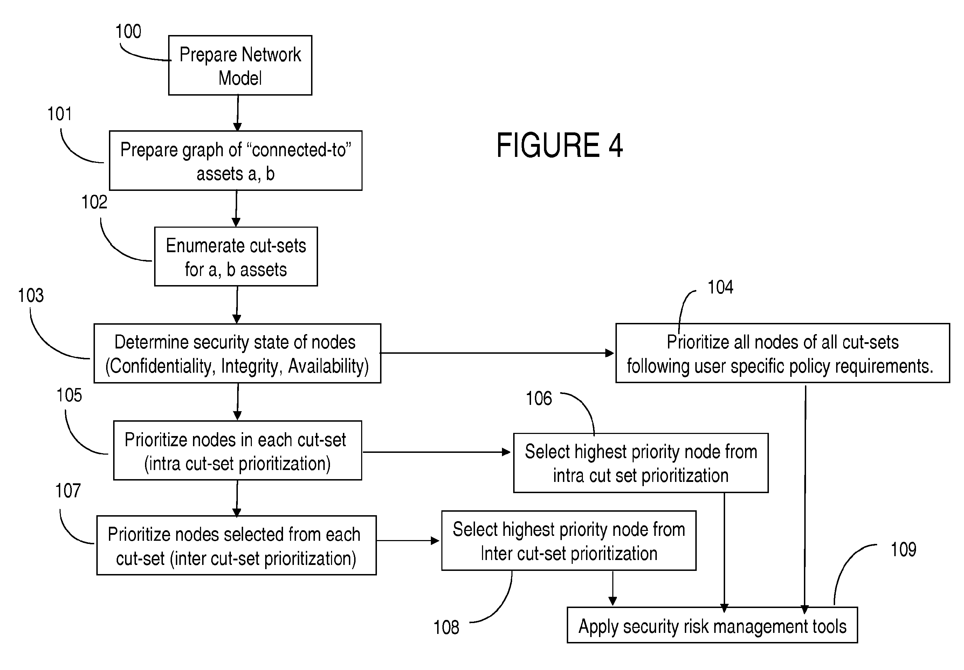

Figure 4 is a flowchart of the security risk assessment according to an embodiment of the invention. A model (network model or network device model) is prepared by showing the assets and their dependencies, as shown in step **100.** From the model, a graph G is prepared next, as shown in step **101.** As indicated before, the graph nodes are the nodes of a networking system (or the sub-components of communication device) and the edges of the graph show the relationship between the nodes (sub-components). Once the graph is generated, the minimal cut-sets are determined for a given pair (a,b) of assets, as shown in step **102.**

Next, the security state of the nodes in the respective minimal cut-set is assessed, step **103.** As indicated above, the security state affected may be the confidentiality, integrity, availability, or other network or security relevant parameter. If we assume that a minimal cut-set $MCS_i$ is composed of *k* assets $A_{i,1},...A_{i,k}$, the likelihood associated with a given cutset $MCS_i$ is given by the following equation:

$$\text{Likelihood}(MCS_i) = \text{minimum}\{\text{Likelihood}(A_{i,j}) \mid 1 = j = k\}$$

$$EQ5$$

The minimum of the likelihood is used in EQ5 since if any one of the assets within a cut-set is free of compromise, the adversary would not be successful. So the most unlikely vulnerability has to be taken into consideration. This equation relies on a given hypothesis, which assumes that if an adversary can perform a low vulnerability attack, he can also perform a high one.

The likelihood associated with the interconnecti ng network G is given by the following equation:

$$\text{Likelihood}(G) = \text{maximum}\{\text{Likelihood}(MCSi) \mid 1 = i = n\}$$

$$EQ6$$

The maximum likelihood is used in equation EQ6 since it is sufficient that only one of the (a-b) cut-sets be compromised for the adversary to be successful. Therefore, the most likely vulnerability has to be taken into consideration.

Each parameter participating in the security risk assessment has to be defined in terms of all security risk attributes of interest. More likely, for confidentiality, integrity and availability attributes, the SRA is determined in terms of a 3-tuple CIA component. The risk equation is applied to each security risk attribute for the respective asset, threat and vulnerability value. This approach allows differentiating the risk, based for example on the motives a given adversary may have in regard to disruption of the normal behavior of an asset. In addition, a malicious entity may not have the same threatening capability for each attribute. In the same vein, vulnerabilities target different type of weaknesses, and may result in a different compromise of the system. This leads to the following generic security risk equation for a single asset:

$$\mathrm{Risk}_A^{[\,C\,,\,I\,,\,A\,]} = \mathrm{Value}_A^{[\,C\,,\,I\,,\,A\,]} \times \mathrm{Likelihood}_A^{[\,C\,,\,I\,,\,A\,]}$$

$$\mathrm{Likelihood}_A^{[\,C\,,\,I\,,\,A\,]} = \mathrm{Threat}_A^{[\,C\,,\,I\,,\,A\,]} \times$$
EQ7

$$\mathrm{maximum}\,\{\mathrm{Vulnerability}^{[\,C\,,\,I\,,\,A\,]}(V_i)\mid 1 = i = k\}$$

Assessment of nodes security state may be performed in different ways, with various levels of detail. For example, assessment of security state of all nodes in all cut-sets may be performed in step **103** and presented to the user/client, for prioritization of all nodes in all cut-sets by using user-specific risk prioritization criteria, as shown in step **104.** The user may then select whatever remediation activities and use adequate security risk management tools to secure the nodes of interest, step **109.**

Or, node prioritization may be performed automatically for each cut-set, using an intra cut-set prioritization algorithm, as shown in step **105.** In the current embodiment prioritization **105** is performed using EQ5 as the objective function to be minimized, however for other embodiments, alternative intra cut -set prioritization schemes may be used. In this scenario, the highest priority node for each cut-set from **105** is selected in **106** for security risk management step **109.** Still further, the nodes prioritized in step **105** from each cut-set may be further prioritized with respect to the other cut-sets. As shown in step **107,** this operation may be performed using an inter cut-set prioritization algorithm. In the current embodiment, prioritization **107** is performed using EQ6 as the objective function to be maxi mized, however for other embodiments, alternative inter cut-set prioritization schemes may be used. In this scenario, the highest priority node from **107** is selected, step **108** from all sets of nodes and presented to the user as the most important security issue to remediate **109.**

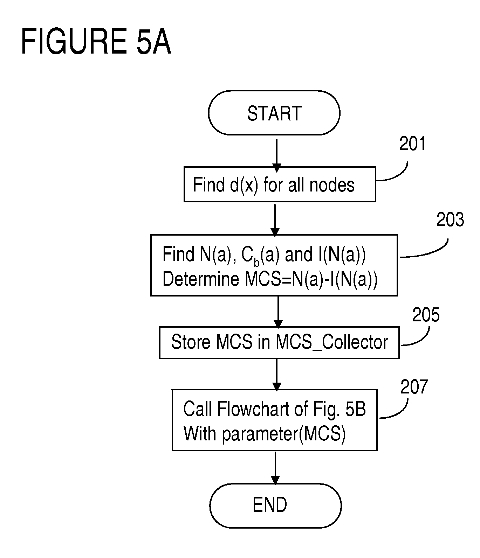

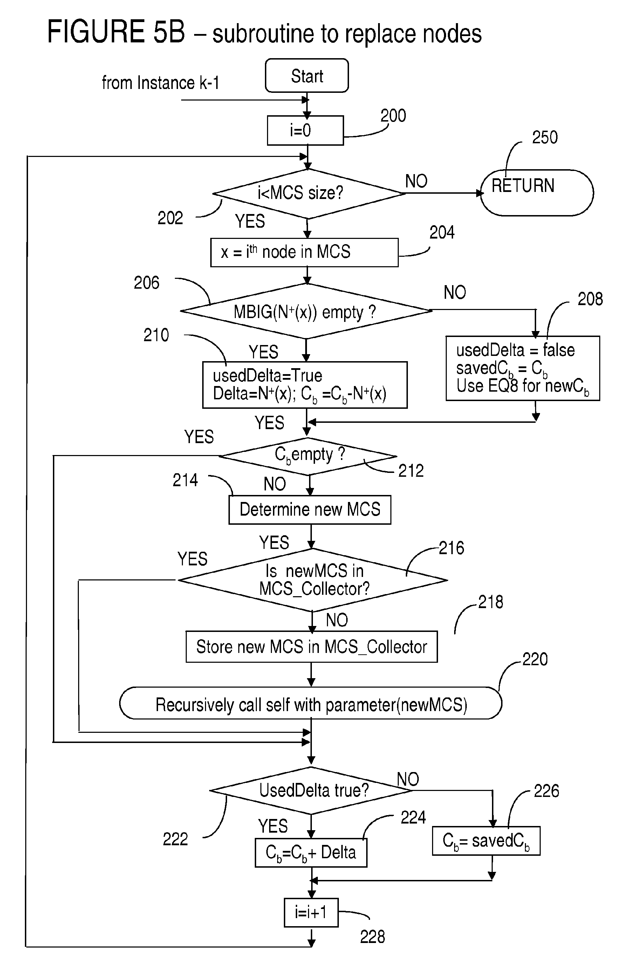

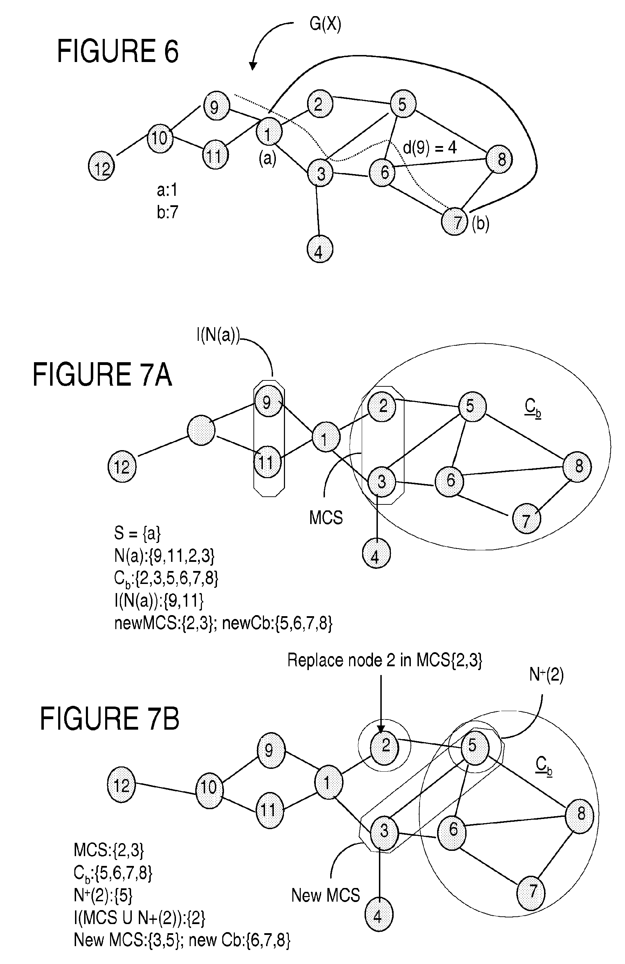

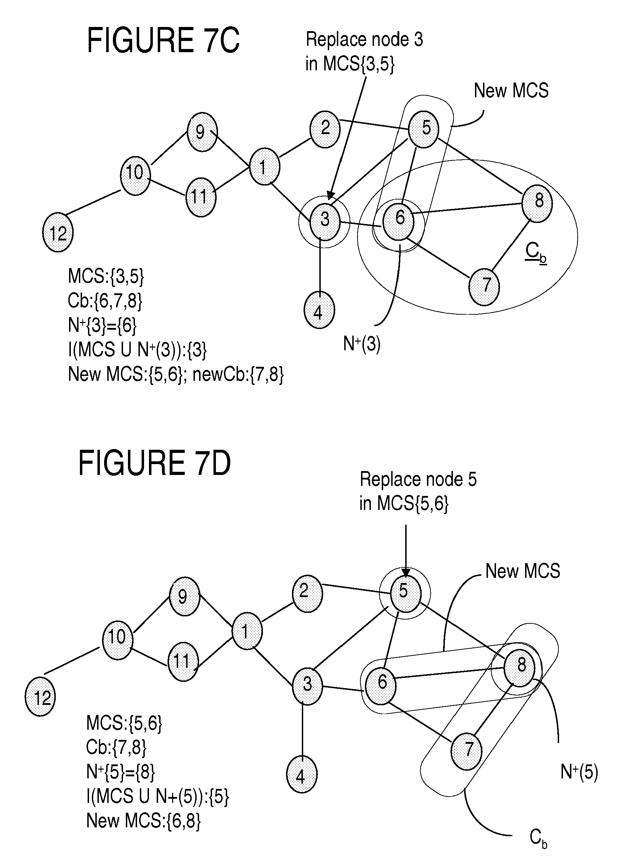

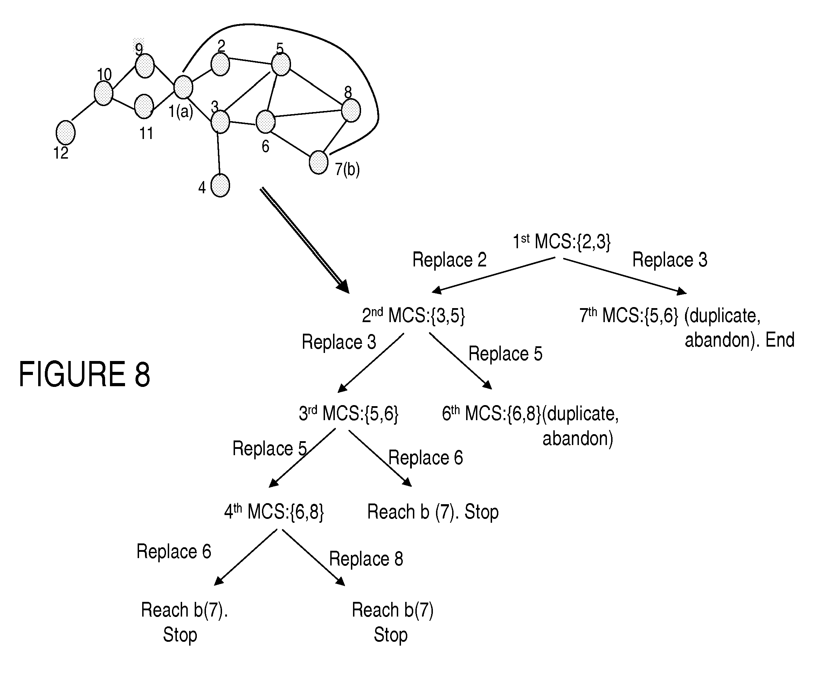

The cut-set enumeration step **102** of Figure 4 is described next in further detail in connection with the flowcharts of Figures 5A and 5B and with reference to the example of Figures 6, 7A-7D and 8. In order to provide a more concrete understanding and the definition of the terms used in the description of the cut-set method, Figure 6 shows the graph of an exemplary network, Figures 7A-7D illustrate the cut-set enumeration for the graph of Figure 6 and Figure 8 shows the resulting expansion tree that depicts how the different MCS's are generated by node replacement.

We use the following definitions, notations and functions:

- G[V,E] is a graph with nodes V and edges E. There are *n* nodes in V, including source node *a,* and destination node *b*. There are 12 nodes (n=12) connected by a plurality of edges (e.g. cables) in the exemplary graph of Figure 6. It is to be noted that the description equally applies to a component and the respective sub-components of a network element and not necessary to nodes on a network. The cut-set method is applied in this example for assessing the security risk for a connection between nodes *1* and *7.* Therefore, the identified cut-sets are used as the basis to the threat and risk analysis (performed in step **103** in Figure 4).
- *a, b* are nodes, the source and destination respectively
- MCS is a minimal *a-b* cut-set. To re-iterate, by definition a cut-set S is a subset of nodes selected such that removing all these nodes with their adjacent edges leaves the nodes *a* and *b* in two different connected sub-networks or components (i.e. there is no path between *a* and *b* in the remaining sub-graph). A cut-set *S* is minimal (MCS) if no subset of *S* is still a cut-set.

- $C_b$, referred to as the "component containing the destination node $b$" is the (maximal) connected component sub-graph resulting from removing the "current" minimal cut-set, and containing node $b$. By definition of a cut-set, $C_b$ cannot contain any node in the same connected component as node $a$. Sub-graph $C_b$ is determined relative to a node of a cut-set according to EQ 8:

$$C_b = ConnectedComponent(b, G[V-MCS])$$

EQ8

- $N(a)$ is the set of nodes adjacent to a node $a$ in graph G (the neighbors of a); and $N(X)$ is the set of nodes adjacent to any of the elements of X.
- $N^+(x)$, also referred to as "$N^+$" is the set of nodes adjacent to a node $x$ in $C_b$. $N^+$ is determined according to EQ 9:

$$N^+(x) = N(x) \cap C_b.$$

EQ9

- $I(X)$, referred to as "isolated nodes" is the subset of nodes X that do not have any edges to $C_b$, after the nodes in the current MCS were removed. In other words, these nodes can only reach $b$ via one or more nodes in the current MCS, so removing the current MCS will "isolate" these nodes from $b$. $I(X)$ is determined as:

$$I(X): \{x \in X \mid (\forall w \in C_b)\ [(x,w) \notin E]\}$$

EQ10

The cut-set enumeration starts with determining the first MCS that is "closest" to the source node. Each node of this MCS is replaced with (some of) its adjacent nodes, to generate new MCS's. Recursively, each node from the new MCS's is replaced again with its neighbors. The MCS's are stored, as each one is found, into a collector; however, a new MCS is only stored into the collector if it is not a duplicate of an already stored MCS. An AVL tree is preferred for the MCS collector since being a balanced tree it guarantees fast search times. A detailed definition of AVL trees can be found at http://www.nist.gov/dads/HTML/avltree.html). Nonetheless, the invention is not restricted to an AVL collector tree; rather, any other data structures may be used in place of AVL trees. Given a MCS, we replace node x in MCS using EQ11:

$$newMCS = (MCS \cup N^+(x)) - I(MCS \cup N^+(x))$$

EQ11

Published algorithms for enumerating cut-sets typically spend the majority of time in the recalculation of $C_b$ as each new MCS is being generated. To improve the running time of the enumeration, we wish to avoid recalculating $C_b$. The approach is to calculate $C_b$ once and keep adjusting it as required. This means $C_b$ must be a global variable and each change to $C_b$ must be carefully tracked so that the change can be undone at the right time. Essentially, each invocation of the subroutine must leave $C_b$ unchanged; we achieve this by changing $C_b$ when we need to and immediately restore it.

The following functions are defined and used:

- Delta is the difference between the old $C_b$ and the new $C_b$ resulting from replacing a node x of a certain MCS (let's call it $MCS_k$). We use the term "current" (or old) to mean the $C_b$ that corresponds to removing $MCS_k$ and "new" to mean the $C_b$ that corresponds to removing $MCS_{k+1}$ (which is the result of replacing node x of $MCS_k$). Use of Delta avoids the recalculation at the minor expense of adding and subtracting Delta from $C_b$; this results in a relevant speed increase of the cut-set enumeration, which is a major advantage of the method described here over the prior art methods. Delta is given by EQ12:

$$Delta = N^+(x)$$

$$EQ12$$

- d(x) is the "shortest distance" from a current node x to destination node $b$ (any one of the destination nodes). Distance d(x) is used to establish whether a node cannot be isolated. Thus, if the shortest distance d(x) from node x to b is greater than the shortest distance d(y) from node y to b, then removing node x cannot isolate node y; since there must be a path from destination node y to b that does not include x, otherwise d(y) must be higher than d(x). The shortest distance between nodes 9 and 7 is 4 shown on Figure 6 by way of example.

- MBIG(U), referred to as "MayBeIsolated" is a group of nodes that may be isolated from the destination by the new MCS. (Note that the d(x) test can determine if a node cannot be isolated; but the d(x) test cannot determine if a node actually is isolated.) The way we do this is to look at the set of nodes in the old $C_b$ that may be isolated from b by the newly constructed cut-set; these "ambiguous nodes" are accumulated into this MayBeIsolated set. In many cases, the MBIG is empty. Again, use of MBIG and d(x) provides a major speed advantage to the cut-set enumeration method of the invention over the existing methods. MBIG(Y) is calculated according to EQ13:

$$MBIG(Y) : \{z \mid (y \in Y), \ [z \in N^+(y)], \ [d(z) > d(y)] \} \qquad EQ13$$

- used Delta is a flag denoting whether Delta has been used, or $C_b$ needs to be calculated (for a new MCS). In other words, the "usedDelta" flag marks whether a re-calculation is needed or not.

The cut-set enumeration commences with establishing the distance d(x) of all nodes to the destination node, step **201.** As indicated above, the shortest distances are useful to establish whether a node can become isolated after any node replacement. Note that while flowchart of Figure 7A shows the distances being calculated once; it is advantageous to recalculate the distance each time the $C_b$ is recalculated, but this is omitted here in order to simplify the explanation. In step **203,** the system identifies the set of nodes N($a$) adjacent to the source node $a$, and the group of isolated nodes I(N($a$)) at this level. The first MCS is then calculated in step **203** as the difference between N($a$) and I(N($a$)).

For the graph G of Figure 6, N($a$) includes nodes 9,11,2 and 3 and $C_b$ includes nodes 2,3,5,6,7 and 8, as seen in Figure 7A. The group of isolated nodes I(N(a)) at this stage includes the nodes 9 and 11, since these nodes do not have any edges to sub-graph $C_b$. $N^+(a)$, which is the intersection between N(a) and $C_b$ is $N^+(a)=\{2,3\}$. The difference between N(a) and I(N(a)) results in a first MCS: {2,3,9,11}- {9,11}={2,3}. This cut-set is stored in the collector, as seen in step **205,** at the root of the tree shown in Figure 8.

Next, in step **207** the subroutine shown in Figure 5B is called to find more MCS's by replacing nodes in the given MCS (in the case, the given MCS is the very first MCS). Once a MCS is stored in the collector tree, a new instance of the subroutine is recursively called to calculate further MCS's resulting from replacing nodes of the new MCS. Therefore, there are a number of instances of the subroutine, depending on the distance between the source and destination node. After each node in the given MCS has been processed, the enumeration returns to the previous instance. As seen in Figure 8, the tree of all MCS is constructed in a standard "depth-first" traversal (see http://mathworld.wolfram.com/Depth-FirstTraversal.html).

Turning now to Figure 5B, the MCS enumeration commences with an initialization step, where the MCS index $i$, which identifies the choice of node in the current MCS is initialized in step **200.** Next, if i = MCS size, branch "No" of decision block **202,** the MCS enumeration for the respective MCS ends, step **250** and the iteration for the previous MCS is resumed from step **222.** This means that each node of the current MCS has been replaced, so the subroutine returns.

If, on the other hand, index $i$ is smaller that the size of MCS, branch "Yes" of decision block **202,** the cut-set enumeration continues with **step204,** where the next node to be replaced is selected. In the example of Figures 7A-7D, the size of the first MCS is 2. As shown by the arrow on Figure 7B, since for $i=0, i$ is smaller than the MCS size, the first node, e.g. node 2 of MCS{2,3} is replaced with the nodes in the $C_b$ that is adjacent to node 2, in this case, {5}.

In step **206,** the set of nodes that may be isolated from the destination (MBIG) is calculated according to EQ13 using the distance test. For the example of Figure 7B, the calculation of MBIG proceeds: x=2; so $N^+(2)=\{5\}$; which means MBIG($N^+(x)$)=MBIG({5}). Looking at EQ13, MBIG = $\{z \mid z \ N^+(5),d(z)>d(5)\}$. Since $N^+(5)=\{6,8\}$, we test z=6 and z=8. In both cases, d(z) is less than d(5), which means that neither node 6 nor node 8 could be isolated by removing node 5, so MBIG is empty in this case. Consequently, we use Delta to adjust the Cb in this case. Delta is calculated using $N^+$, as shown in step **210**. As well, the current $C_b$ is adjusted to the new $C_b$ by subtracting Delta. The usedDelta flag is set true; this flag marks how the Cb was derived so that we can restore the Cb after the return in step **222.**

If MBIG($N^+(x)$) is not empty, as shown by branch "No" of decision block **206,** the flag usedDelta is set to false, to indicate that Delta has not been used, in which case we save the current Cb and the new $C_b$ is calculated according to EQ8 in step **208.**

In both instances, the cut-set enumeration continues with step **212,** which checks if the enumeration attained the destination node b, by checking if $C_b$ still includes nodes. Thus, if $C_b$ is not empty, as shown by branch "No" of decision block **210,** a new MCS is computed in step **214** using EQ11. In the example, the new $C_b$ (see Figure 7C) includes nodes {6,7,8} and as such it is not empty, so that the new MCS is calculated: newMCS= {2,3} $\in$ {5} - {2} = {3,5}. If on the other hand $C_b$ is empty, as shown by branch "Yes" of decision block **212,** we skip steps **214** through **220.**

Decision block **216** filters out the MCS's that are already saved. Thus, the newMCS determined in step **214** is only stored in the MCS_Collector if the newMCS has not already been found.

On the "No" branch of decision block **216,** once the newMCS is saved, step **218,** a new iteration is (recursively) called to generate further cut-sets by replacing nodes in newMCS. In other words, a new enumeration starting with the first node of the new MCS begins with step **200** on a new instance of the flowchart.

When the subroutine returns, the flag used Delta is checked to restore $C_b$. If used Delta is true, branch "Yes" of decision block **222,** $C_b$ is set at the value before the last MCS calculation, by adding Delta to the current value of $C_b$. This is shown in step **224.** If used Delta flag is false, the savedCb value is restored to Cb as show in step **226.** After the C b is restored, the enumeration continues for the next node of the MCS by increasing index *i* as shown in step **228.** Since in step **202** *i* is still less than the size of the MCS, another iteration of this instance of the enumeration takes place, as shown in Figure 7C.

In Figure 7C, node 3, in the MCS {3,5}, is being replaced. In this case, $N^+(3)$ is {6} and I(MCS U $N^+(3)$) is {3}. Delta is calculated resulting as {5} which adjusts $C_b$ to be {6,7,8}. The new MCS is then calculated: newMCS:{5,6} and stored, as it has not been enumerated yet

When each node of the current MCS has been replaced (which happens when index *i* is greater than or equal to the size of the MCS), the subroutine returns ("popping the recursion stack" and returning to the previous instance).

The invention is focused specifically on the use of cut-sets, "Node Cut Sets", "Edge Cut Sets", "Separator Sets" and similar methods for identifying critical nodes for enabling further analysis of the network security state. In an interconnected graph of nodes and edges (representing nodes and links in a network), there are some graph topologies where the set of minimal cut sets will not include all nodes on available paths between source and destination. Therefore, there may exist some high risk nodes that do not get identified in systems that rely on cut-sets alone. For these isolated cases, other mechanisms are required to identify the high risk nodes (i.e., by assessment of risks for nodes that are on a known routed path between dependent assets), which are not the object of the invention.

**Claims**

1. A security risk analysis method for a system with a high degree of inter-relationships and interdependencies among a plurality of system assets and services, comprising:

   a) preparing a model for said system;
   b) from said model, preparing a graph G[V,E] with graph nodes V representing said assets and services, and edges E representing the relationships between said assets and services;
   c) on said graph, enumerating all minimal cut-sets (MCS) between a first group of graph nodes and a second group of graph nodes to identify all graph nodes that may impact relationships between said first and second groups of dependent graph nodes; and
   d) assessing the security state of the graph nodes in said MCS's.

2. The method of claim 1, wherein said security state is assessed for one or more security parameters.

3. The method of claim 2, wherein said security parameters are confidentiality, integrity, availability of said graph nodes.

4. The method of claim 1, wherein step d) comprises:

   evaluating the risk of said graph nodes in said MCS's as a function of the value of said respective graph node and the probability (Likelihood$_A$) that a weakness of said asset will be exploited (EQ1); and
   evaluating the risk of said service based on the value of said service and the probability (Likelihood($A_i$)) that a

vulnerability has been exploited against any asset in said MCS's.

5. The method of claim 1, wherein step d) comprises evaluating the risk of a selected MCS as a function of the minimum of all probabilities (Likelihood($A_{ij}$) determined for each graph node in said MCS.

6. The method of claim 1, wherein step d) comprises evaluating the security risk of the relationships between said first and second groups of dependent graph nodes as a function of the maximum of all probabilities (Likelihood($MCS_i$)) determined for each graph MCS in said MCS's.

7. The method of claim 1, further comprising:

prioritizing graph nodes based on client-specific risk assessment criteria; and
securing a subset of graph nodes for minimizing the risk to the relationship between said first and second groups of dependent graph nodes.

8. The method of claim 1, further comprising:

prioritizing the graph nodes in each MCS of all MCS's based on the security state of said assets;
identifying in each MCS a high-risk graph node based on client-specific risk assessment criteria; and
securing said high-risk graph node for ensuring confidential, accurate and available communications between said first and second groups of dependent graph nodes.

9. The method of claim 1, further comprising:

prioritizing the graph nodes of all MCS's based on the security state of said graph nodes;
identifying a highest-risk graph node from all assets in all MCS's based on client-specific risk assessment criteria; and
securing said higher-risk graph node for ensuring confidential, accurate and available communications between said first and second groups of dependent graph nodes.

10. The method of claim 1, wherein said system is a communication network, said assets are the nodes of said communication network, and said first and second dependent assets are a first and a second node connected over said communication network.

11. The method according to claim 10, wherein step c) comprises:

c1) determining on said graph a shortest distance $d(x)$ for all nodes to said second node;
c2) identifying on said graph a set of nodes $N(a)$ adjacent to said source node, a connected component $C_b(a)$ which is a sub-graph containing said second node and a group of isolated nodes $I(N(a))$ ;
c3) finding a first minimal cut-set MCS that isolates said first node from said second node, said first MCS having a number of nodes identified by an index *i*;
c4) storing said first MCS at the root of a MCS collector tree; and
c5) enumerating all MCS's originating from each node of said first MCS, using a subroutine, wherein each new instance $S(k+1)$ of said subroutine processes a current MCS, a current $C_b$ and a current variant of said MCS collector received from a current instance $S(k)$, into a new MCS, a new $C_b$ and a new variant of said MCS collector,

12. The method of claim 11, wherein said current MCS is stored in said MCS collector tree only if it is not a duplicate of an already stored MCS.

13. The method of claim 11, wherein step c5) comprises, for each said current instance $S(k)$ that replaces a node x of said current MCS:

finding a set of adjacent nodes ($N^+(x)$), including all nodes adjacent to said node x that are still connected to said second node after the nodes of said current MCS have been removed from said graph; and
establishing if said graph includes any nodes ($MBIG(N^+(x))$) that may be isolated from said second node by said new MCS.

14. The method of claim 13 further comprising determining said current $C_b$ based on said set of adjacent nodes, if MBIG is empty.

15. The method of claim 14 further comprising storing said $N^+$ as a difference function Delta and setting a flag used Delta to true, to indicate that a recalculation of said new Cb is needed.

16. The method of claim 13, further comprising saving said current $C_b$ if MBIG is not empty; and determining said current $C_b$.

17. The method of claim 16, further comprising setting a flag used Delta to false, to indicate that a recalculation of said new Cb is not needed.

18. The method of claim 14, wherein step c5) comprises, for a current instance for which said used Delta flag is true:

   retrieving said difference function Delta; and
   calculating said new $C_b$ by adding Delta to said current $C_b$.

19. The method of claim 16, wherein step c5) comprises, for a current instance for which said used Delta flag is false, retrieving said current $C_b$ for use as said new $C_b$.

20. The method of claim 11, wherein said shortest distance d(x) indicates if removing a node of said current MCS cannot isolate another node from said second node.

21. The method of claim 13 wherein $MBIG(N^+(x))$ includes all nodes of said current MCS that may be isolated from said second node by said new MCS, said nodes being accumulated into $MBIG(N^+(x))$ based on said respective d(x).

FIGURE 1

EP 1 768 045 A2

FIGURE 2

FIGURE 3A

FIGURE 3B

FIGURE 4

```
        100
          ┌─────────────────┐
          │ Prepare Network │
          │      Model      │
          └────────┬────────┘
                   │
    101            ▼
          ┌──────────────────────────┐
          │ Prepare graph of "connected-to" │
          │       assets a, b        │
          └────────┬─────────────────┘
                   │
    102            ▼
          ┌──────────────────┐
          │ Enumerate cut-sets │
          │  for a, b assets  │
          └────────┬─────────┘
                   │                                                       104
    103            ▼                                          ┌──────────────────────────────────┐
          ┌──────────────────────────────────┐ ───────────▶ │ Prioritize all nodes of all cut-sets │
          │  Determine security state of nodes │              │ following user specific policy requirements. │
          │ (Confidentiality, Integrity, Availability) │       └──────────────┬───────────────────┘
          └────────┬─────────────────────────┘                              │
                   │                           106                          │
    105            ▼                             ┌──────────────────────┐    │
          ┌──────────────────────────┐ ───────▶ │ Select highest priority node from │
          │  Prioritize nodes in each cut-set │   │   intra cut set prioritization   │
          │  (intra cut-set prioritization)  │   └────────────┬─────────┘    │
          └────────┬─────────────────┘                        │             │
                   │                                          │             │
    107            ▼                                          │             │
          ┌──────────────────────────┐   ┌──────────────────────────┐      │
          │ Prioritize nodes selected from each │──▶│ Select highest priority node from │   │
          │ cut-set (inter cut-set prioritization) │   │  Inter cut-set prioritization  │   │
          └──────────────────────────┘   └──────┬─────────┬─────────┘      │
                                      108        │         │               │
                                                 ▼         ▼               ▼
                                          ┌──────────────────────────────────┐   109
                                          │ Apply security risk management tools │
                                          └──────────────────────────────────┘
```

# FIGURE 5A

START

Find d(x) for all nodes — 201

Find N(a), $C_b$(a) and I(N(a))
Determine MCS=N(a)-I(N(a)) — 203

Store MCS in MCS_Collector — 205

Call Flowchart of Fig. 5B
With parameter(MCS) — 207

END

# FIGURE 5B – subroutine to replace nodes

from Instance k-1

Start

i=0 — 200

i<MCS size? — 202

NO → RETURN — 250

YES

x = $i^{th}$ node in MCS — 204

MBIG($N^+(x)$) empty ? — 206

NO → usedDelta = false
savedC$_b$ = C$_b$
Use EQ8 for newC$_b$ — 208

YES

usedDelta=True
Delta=$N^+(x)$; C$_b$ =C$_b$-$N^+(x)$ — 210

YES

C$_b$ empty ? — 212

YES

NO

Determine new MCS — 214

YES

Is newMCS in
MCS_Collector? — 216

YES

NO

Store new MCS in MCS_Collector — 218

Recursively call self with parameter(newMCS) — 220

UsedDelta true? — 222

NO → C$_b$= savedC$_b$ — 226

YES

C$_b$=C$_b$+ Delta — 224

i=i+1 — 228

## FIGURE 6

G(X)

d(9) = 4

a:1
b:7

## FIGURE 7A

I(N(a))

C_b

MCS

S = {a}
N(a):{9,11,2,3}
C_b:{2,3,5,6,7,8}
I(N(a)):{9,11}
newMCS:{2,3}; newCb:{5,6,7,8}

## FIGURE 7B

Replace node 2 in MCS{2,3}

N⁺(2)

C_b

New MCS

MCS:{2,3}
C_b:{5,6,7,8}
N⁺(2):{5}
I(MCS U N+(2)):{2}
New MCS:{3,5}; new Cb:{6,7,8}

# FIGURE 7C

Replace node 3
in MCS{3,5}

New MCS

N⁺(3)

MCS:{3,5}
Cb:{6,7,8}
$N^+\{3\}=\{6\}$
I(MCS U $N^+$(3)):{3}
New MCS:{5,6}; newCb:{7,8}

$\underline{C_b}$

# FIGURE 7D

Replace node 5
in MCS{5,6}

New MCS

MCS:{5,6}
Cb:{7,8}
$N^+\{5\}=\{8\}$
I(MCS U N+(5)):{5}
New MCS:{6,8}

$N^+$(5)

$C_b$

FIGURE 8

1st MCS:{2,3}

Replace 2 — Replace 3

2nd MCS:{3,5}

7th MCS:{5,6} (duplicate, abandon). End

Replace 3 — Replace 5

3rd MCS:{5,6}

6th MCS:{6,8}(duplicate, abandon)

Replace 5 — Replace 6

4th MCS:{6,8}

Reach b (7). Stop

Replace 6 — Replace 8

Reach b(7). Stop

Reach b(7) Stop

EP 1 768 045 A2

**EP 1 768 045 A2**

**REFERENCES CITED IN THE DESCRIPTION**

**Patent documents cited in the description**

- US 132118 A